# EUROPEAN PATENT APPLICATION

(11) **EP 0 589 850 A1**
(43) Date of publication of application: **30.03.1994**
(21) Application number: 93830355.9
(22) Date of filing: 23.08.1993
(51) Int. Cl.: H01M 8/10, C25B 9/00

(54) **Electrochemical cell employing solid polymer electrolyte**

(30) Priority: 21.08.1992 JP 245673/92
(71) Applicant: Tanaka Kikinzoku Kogyo K.K., Chuo-ku Tokyo (JP); Watanabe, Masahiro, Kofu-shi, Yamanashi (JP); STONEHART ASSOCIATES INC., Madison, Connecticut 06443 (US)
(72) Inventor: Watanabe, Masahiro, Kofu-shi, Yamanashi (JP); Sakairi, Koichi Tanaka Kikinzoku Kogyo Tech.Center, Kanagawa (JP)
(74) Representative: Pellegri, Alberto

(57) **Abstract**

Electrochemical cell employing solid polymer electrolyte [4] having a five-layered sandwich structure, cathode collector, cathode [3], ion exchange membrane [4], anode [5], anode collector [6] assembled by applying forces to the outer surfaces thereof by means of tightening plates [1]. Since no heat treatment is required for assembling the electrochemical cell, the distortion or the like produced due to the heat is not generated.

## Description

### Background of the Invention

The present invention rclates to an improvement of such an cell as a fuel cell employing solid polymer electrolyte and a chemical sensor.

An electrochemical cell, for example, a fuel cell employing solid polymer electrolyte attracts attention as an electric power source of an electric automobile and a spacecraft because it can produce high electric power density. In the developments of this field, various electrode structures, methods of preparing catalysts and system architectures have been proposed.

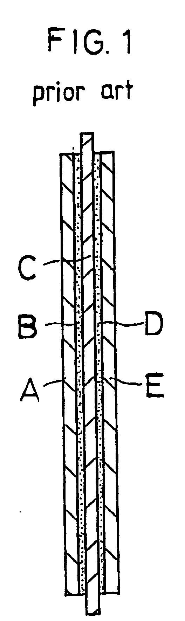

A conventional fuel cell has a five-layered sandwich structure consisting of a current collector of cathode A / a cathode B / a solid polymer electrolyte (ion exchange membrane) C / an anode D / a current collector of anode E as shown in Fig. 1. A hotpressing method or a sintering method may be employed for constituting the above structure This structure is obtained by ① bonding the cathode B and the anode D to both sides of the ion exchange membrane C and then bonding the current collector of cathode A and the current collector of cathode E to the outer faces of the cathode B and the anode D, respectively, by means of hotpressing or the like, or by ② bonding the cathode B to the current collector of cathode A, and the anode D to the current collector of anode E by means of the hotpressing or the sintering and further bonding the both assembled electrodes to both sides of the ion exchange membrane C by means of the hotpressing or the sintering. A similar structure has been employed in an electrolytic cell for electrolyzing water and a chemical sensor.

However, the method ① of the two methods has the drawbacks that a crack is likely to be produced on the electrode because the ion exchange membrane is expanded and contracted depending on water content so that the handling thereof is rather difficult and that the ion exchange membrane is required to be thermostable because it is exposed to a high temperature during the hotpressing. The method ② has also the drawbacks that the two bond processes between the cathode or the anode and its current collector and between the assembled electrodes and the ion exchange membrane are required to increase the number of steps of the hotpressing so that the ion exchange membrane which may be exposed to a high temperature with high probabilities is required to have higher thermostabilities and that the anode and the cathode are likely to be peeled off due to the expansion and the contraction of the ion exchange membrane during the storage.

An expensive perfluorocarbon ion exchange membrane is ordinarily employed as the above ion exchange membrane because a iisual hydrocarbon ion exchange membrane may be deteriorated due to a high temperature during the hotpressing or the sintering. Accordingly, it may be suggested that the employment of the expensive perfluorocarbon ion exchange membrane is unnecessary unless the hotpressing or the sintering is conducted.

### Summary of the Invention

An object of the present invention is to provide an electrochemical cell employing solid polymer electrolyte which essentially possesses a five-layered structure.

Another object of the invention is to provide an electrochemical cell employing solid polymer electrolyte which may permit the employment of an inexpensive hydrocarbon ion exchange membrane by obviating such a procedure as hotpressing.

The present invention is an electrochemical cell employing solid polymer electrolyte having a five layered sandwich structure comprising a current collector of cathode / a cathode / an on exchange membrane / an anode / a curront collector of anode layered in this turn which is assembled by applying the respective inner forces to a pair of tightening plates located outside of the both current collectors.

Since the electrochemical cell having this structure can be easily assembled because the hotpressing or the sintering is not employed in the bonding of the ion exchange membrane but only the tightening by means of bolts or the like is employed, the efficiency of the assembling is remarkably increased. Further, no deterioration of the ion exchange membrane due to the heat occurs so that an inexpensive hydrocarbon ion exchange membrane which is not stable to heat can be employed as an ion exchange membrane of the present invention. Since, moreover, the ion exchange membrane, the anode and the cathodo may be separately stored before the assembling, no distortion between the ion exchange membrane and the anode and between the membrane and the cathode is generated to produce the peel-off.

The electrochemical cell having the these advantages in accordance with the present invention which possesses the same or similar performance compared with that of a conventional electrochemical cell manufactured by the hotpressing and overcomes the drawbacks of the hotpressing method is epoch-making.

If the tightening force at time of assembling the cell is insufficient, the respective members are not sufficiently contacted with each other so that the resistance is increased. Even if, on the other hand, the tightening force is made so large, the resistance cannot be excessively lowered even though the excessive load crushes the respective members. The desirable range of the tightening force is between 10 and 500 kg/cm².

When the membrane thickness is between 5 and 20 µm, the cell characteristics may be realized with the maximum efficiencies. However, in the conventional cell prepared by the hotpressing, the membrane having the above thickness may be liable to be damaged during the hotpressing or the storage. On the other hand, the electrochemical cell of the invention with the above identified structure having the membrane thickness of 5 to 20 µm is resistant to the damage and its characteristics may be effectively utilized.

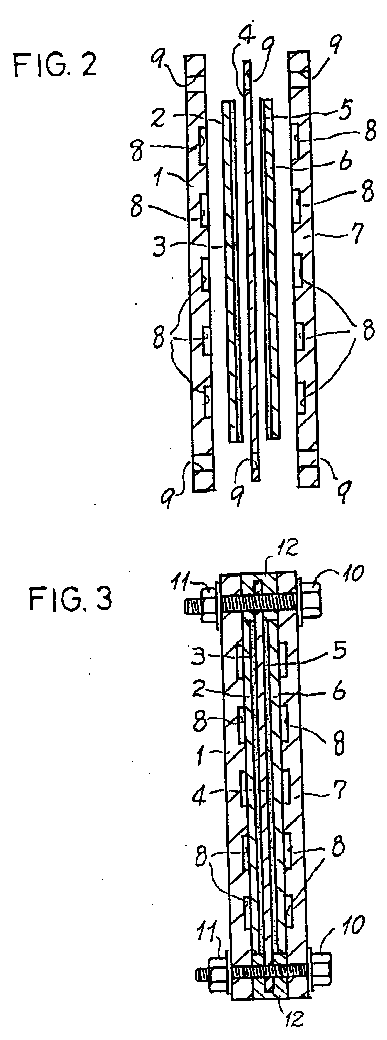

The present invention may be applied not only to a single cell as shown in Fig.3 mentioned below but also to a plurality of stacked cell.

### Brief Description of the Drawings

Fig.1 is a schematic sectional view showing an electrode structure of a conventional fuel cell;
Fig.2 is a broken elevational view exemplifying a layered state of an electrochemical cell in accordance with the present invention before the assembling;
Fig.3 is an elevational view of the cell of Fig. 2 after the assembling;
Fig.4 is a graph showing the relation between a degree of bolt rotation and a resistance of the cell at the time of the assembling of the electrochemical cell by means of the bolt tightening.
Fig.5 is a graph showing the relation between the logarithm of currents and volts of Example 1 and Comparative Example 1.

### Detailed Description of the Invention

Although a current collector or an ion exchange membrane and an electrode (a cathode or an anodo) are assembled by hot pressing or sintering in a conventional five-layered sandwich structure, the hotpressing and the like contemplate not only the mere assembling but also the decrease of a contact resistance by smoothing the contact of the interfaces between the current collector and the electrode and between the electrode and the ion exchange membrane.

The present invention is characterized by the fact that the assembling of the members and the decrease of the contact resistance by means of the conventional hotpressing is realized by the tightening by means of tightening plates located on both sides of the layered members so that the employment of a thermostable ion exchange membrane which is a drawback of the hotpressing method is unnecessary.

The ion exchange membrane employed in the electrochemical cell of the present invention may be any ion exchange membrane having an ion exchange group and, for example, a thermostable perfluorocarbon ion exchange membrane having a carboxylic acid or a sulfonic acid group and a non-thermos table hydrocarbon ion exchange membrane having a carboxylic acid or a sulfonic acid group can be employed.

As catalyst particles constituting the anode and the cathode, conventional particles prepared by applying such a catalyst metal as platinum on carbon powder may be employed without further modification. All the particles are not necessarily required to have the supported catalyst, and the mixture of the catalyst-supported particles and the catalyst-non-supported particles may be employed. Further, the electrode catalyst particles may be desirably coated with ion exchange resin to elevate the affinity with the ion exchange membrane.

The current collector is not especially restricted, and a carbon sheet, a sintered sheet of metal particles or a carbon or metal mesh or the like may be preferably employed. The current collector and the catalyst electrode are desirably assembled by means of hotpressing or cold pressing prior to the tightening.

As mentioned earlier, the respoctive members are layered in the turn of the current collector of cathode / the cathode / the ion exchange membrane / the anode / the current collector of anode and are tightened and assembled by means of the tightening plates located on both sides. A bolt penetrating the both tightening plates and the ion exchange membrane is desirably employed for the tightening, and in addition to this, the cell tightening pressure may be applied with an elastic member such as a spring or a rubber bush.

If the tightening force is weak, the respective members are not sufficiently contacted with each other so that the resistance value is not amply decreased. If, on the other hand, the tightening force is excessively large, the destruction of the members are meaninglessly liable to occur. The desirable range of the tightening force is 10 to 500 kg/cm²-unit electrode surface area. This tightening force corresponds to one which makes the original thickness of the five-layered sandwich structure to the contracted thickness of 90 to 65 % of the original. The resistance value thereof is less than 1.5 times of the summed values of those of the ion exchange membrane and the electrode members.

Since the electrochemical cell having this structure in accordance with the present invention does not employ the hotpressing and the sintering in the bonding of the ion exchange membrane, no deterioration of the ion exchange membrane due to the heat occurs so that the inexpensive hydrocarbon ion cxchange membrane which is not stable to heat can be employed. Further, the effective assembling of the cell can be attained because the assembling may be completed only by the tightening to decrease the number of steps. Since, moreover, the ion exchange membrane and the electrodes may be separately stored before the assembling, no distortion between the ion exchange membrane and the anode and between the membrane and the cathode is generated to produce the peel-off. The electrochemical cell having the these advantages of the invention possesses the same or similar characteristics compared with thoso of an electrochemical cell manufactured by the hotpressing.

Referring to Fig.2, an electrochemical cell is composed of a tightening plate for cathode 1, a current collector for cathode 2, a cathode 3, an ion exchange membrane 4, an anode 5, a current collector for anode 6 and a tightening plate for anode 7 layered in this turn from the left side in Fig.2. The current collector for cathode 2 and the cathode 3, and the current collector for anode 6 and the anode 5 are assembled in advance. A plurality of concave surfaces 8 are formed on the respective surfaces of the a tightening plate for cathode 1 and the tightening plate for anode 7 facing to the respective electrodes 2 and 6, and four bolt apertures 9 are formed through the four corners of the respective portions of the both tightening plates 1 and 7. Bolts 10 are inserted through the bolt apertures 9 of which other ends are tightened with nuts 11 to assemble and firmly adhere the current collector for cathode 2, the cathode 3, the ion exchange membrane 4, the anode 5 and the current collector for anode 6. Sealing material 12 is filled up to prevent gas leakage.

### Examples

Although Examples of the the present invention will be described, these Examples are not construed to limit the invention.

### Example 1

After 10 g of carbon powder was impregnated in an aqueous solution of chloroplatinic acid (platinum concentration: 150 g/liter), it was thermally treated to obtain a platinum carbon catalyst of which a supported platinum amount was 30 % in weight. The carbon catalyst was immersed in a commercially available ion exchange resin dispersion solution (Nafion® solution), and dried so that an ion exchange resin layer was formed on the surface of the catalyst. The catalyst powder was fractionated to obtain the powder having an average supported platinum amount of 0.3 mg/cm² and the fractionated powder was redispersed in alcohol.

After this dispersion solution was filtered under weak suction to adhere the above catalyst powder on a filter paper of which a diameter was 50 mm while remaining a small amount of the alcohol on the filter paper, the filter paper was hotpressed at a temperature of 130 °C and a pressure of 5 kg/cm² with a hydrophobically treated carbon paper functioning as a current collector to prepare an electrode equipped with the current collector having an anode or a cathode on the opposite side.

The two electrodes thus prepared were contacted to the respective sides of a perfluorocarbon ion exchange membrane, Nafion® (made by Du Pont), having bolt apertures at the four corners and having a diameter of 30 mm and a thickness of 150 µm, and a pair of tightening plates made by brass having a height of 5 cm, a width of 5 cm and a thickness of 10 mm and having many concaves on an inner surface and bolt apertures at the four corners was located outside of the electrodes. An electrochemical cell was assembled by inserting bolts (1 pitch = 0. 8 mm) through the bolt apertures at the four corners of the tightening plates and tightening the ends of the bolts with nuts.

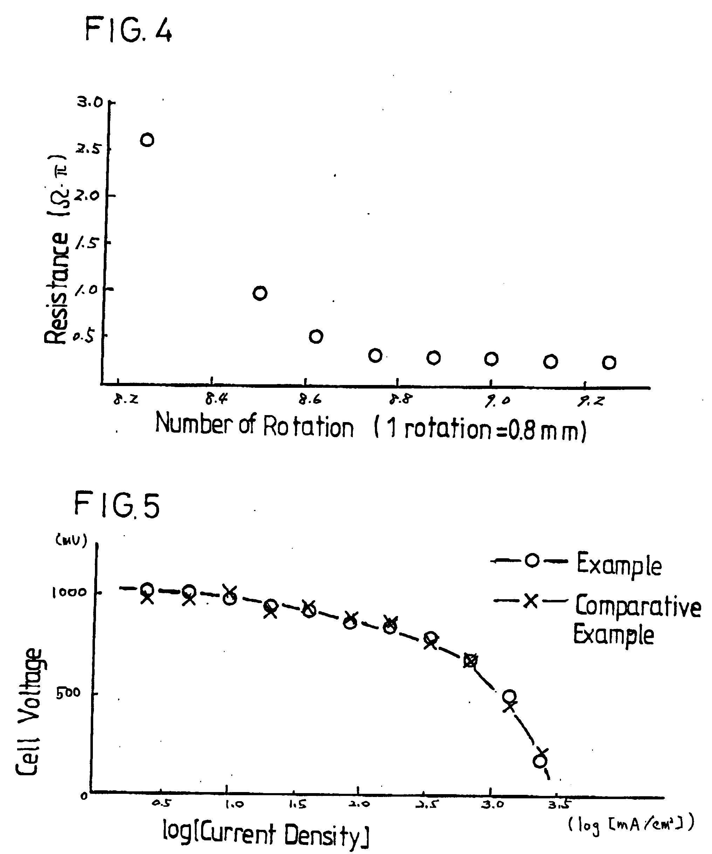

In this stage, the relation between the degree of rotation of the bolts and the resistance of the electrochomical cell was measured while changing the degree of rotation of the tightening to vary the tightening strength. The results were shown in a graph of Fig.4. It can be seen from this graph that the resistance is sufficiently lowered and the respective members are adhered to and assembled with each other from the point of which rotation is 8.6. The tightening pressure of the cell is 20 kg/cm².

The characteristics of this electrochemical cell were evaluated by measuring its current-voltage relation under the following conditions. Supply gases to the anode and the cathode were wetted hydrogen and non-wetted oxygen, respectively, and the rolation between the logarithm of [R free current density (mA/cm²) and an obtained voltage (mV) was measured. The results are shown in Fig.5.

### Comparative Example 1

The ion exchange membrane was located between the anode and the cathode equipped with current collectors of Example 1 and was hotpressed at a temperature of 130 °C and a pressure of 5 kg/cm² to constitute an electrochemical cell.

The characteristics of this electrochemical cell were evaluated by measuring its current-voltage relation in accordance with the same procedures as those of Example 1. The results are shown in Fig.5.

It can be seen that the relations of current-voltage of the both cells are substantially identical judged from the graph of Fig.5 and the electrochemical cell prepared by the tightening method of Example 1 has the substantially same characteristic as those of the cell prepared by the hotpress method in this Comparative Example.

### Example 2 and Comparative Example 2

An electrochemical cell was assembled by the same procedures as those of Example 1 except that a hydrocarbon ion exchange membrane having an EW value of 900 was employed as an ion exchange membrane (Example 2).

On the other hand, an electrochemical cell was assembled by the same procedures as those of Comparative Example 1 except that the hydrocarbon ion exchange membrane of Example 2 was employed (Comparative Example 2)

Cell resistance values measured by a current interrupter method were 0.1 Q.cm² (Example 2) and 0.3 Q.cm² (Comparative Example 2). When the same hydrocarbon ion exchange membrane having less thermostabilities was employed, the deterioration of the cell assembled by the tightening method of Example 2 was lesser than that of the cell prepared by the hotpress method and the IR loss of the cell of Example 2 was smaller.

## Claims

1. In an electrochemical cell employing solid polymer electrolyte having a five-layered sandwich structure comprising a current collector of cathode / a cathode / an ion exchange membrane / an anode / a current collector of anode layered in this turn which is assembled by applying the respective inner forces to a pair of tightening plates located outside of the both current collectors, the ion exchange membrane prior to tightening is not bonded to either or the both of the ion exchange membrane.

2. The electrochemical cell as claimed in Claim 1, wherein the inner forces are between 10 and 500 kg/cm².

3. The electrochemical cell as claimed in Claim 1, wherein the thickness of the membrane is between 5 and 20 µm.
